# EUROPÄISCHE PATENTSCHRIFT

(11) **EP 2 389 641 B1**
(45) Veröffentlichungstag und Bekanntmachung des Hinweises auf die Patenterteilung: **12.03.2014**
(21) Anmeldenummer: 10711992.7
(22) Anmeldetag: 22.01.2010
(51) Int. Cl.: G06F 21/62, G06F 21/77, G06F 21/41, H04L 29/06

(54) **EINRICHTUNG ZUR GENERIERUNG EINES VIRTUELLEN NETZGÄNGERS**
SYSTEM TO GENERATE A VIRTUAL WEB SURFER
SYSTEME POUR GENERER UN UTILISATEUR WEB VIRTUEL

(30) Priorität: 22.01.2009 DE 102009005810
(43) Veröffentlichungstag der Anmeldung: 30.11.2011
(73) Patentinhaber: Uniscon universal identity control GmbH, 80992 München (DE)
(72) Erfinder: JÄGER, Hubert, 82049 Pullach (DE); MONITZER, Arnold, 85229 Markt Indersdorf (DE)
(74) Vertreter: Bettinger Schneider Schramm
(86) Internationale Anmeldenummer: PCT/EP2010/000392
(87) Internationale Veröffentlichungsnummer: WO 2010/084017

(56) Entgegenhaltungen:
- WO-A1-2005/034424
- US-A1- 2003 172 090
- Wikipedia: "Telecommunications data retention" Wikipedia 12. Januar 2009 (2009-01-12), XP002585222 Gefunden im Internet: URL:http://en.wikipedia.org/w/index.php?ti tle=Telecommunications_data_retention&oldi d=263559583> [gefunden am 2010-05-31]
- SYVERSON P F ET AL: "Anonymous connections and onion routing" SECURITY AND PRIVACY, 1997. PROCEEDINGS., 1997 IEEE SYMPOSIUM ON OAKLAND, CA, USA 4-7 MAY 1997, LOS ALAMITOS, CA, USA,IEEE COMPUT. SOC, US LNKD- DOI:10.1109/SECPRI.1997.601314, 4. Mai 1997 (1997-05-04), Seiten 44-54, XP010230141 ISBN: 978-0-8186-7828-8
- PFITZMANN A ET AL: "Anonymity, unobservability, and pseudonymity-a proposal for terminology" LECTURE NOTES IN COMPUTER SCIENCE, SPRINGER, DE LNKD- DOI:10.1007/3-540-44702-4_1, Bd. 2009, 1. Januar 2001 (2001-01-01), Seiten 1-9, XP002311747 ISSN: 0302-9743
- CHAUM D: "SECURITY WITHOUT IDENTIFICATION: TRANSACTION SYSTEMS TO MAKE BIG BROTHER OBSOLETE" COMMUNICATIONS OF THE ASSOCIATION FOR COMPUTING MACHINERY, ACM, NEW YORK, NY, US LNKD- DOI:10.1145/4372.4373, Bd. 28, Nr. 10, 1. Oktober 1985 (1985-10-01), Seiten 1030-1044, XP002940222 ISSN: 0001-0782 in der Anmeldung erwähnt

## Beschreibung

Die Erfindung betrifft eine Vorrichtung und eine Einrichtung zur Generierung eines virtuellen Netzgängers, der zum Zweck des Datenschutzes als Pseudonym nutzbar ist, unter dem eine natürliche oder juristische Person sich Zugang zum Internet oder einem vergleichbaren Netz verschaffen und über das Netz implementierbare Dienste in Anspruch nehmen kann, ohne dass Dritten, die mit dem virtuellen Netzgänger geschäftliche oder persönliche Beziehungen über das Internet aufnehmen oder durch Abhören einer solchen Kommunikation, die Identität der natürlichen oder juristischen Person, die hinter dem Pseudonym sich verbirgt, offenbar werden kann. Zur Implementierung des virtuellen Netzgängers dient hierbei eine wählbar vorgebbare Kombination von Attributen, die - im Prinzip - willkürlich vorgebbar sind, die in praxi jedoch auch, soweit gesetzlich vorgegebene Bestimmungen erfüllt werden müssen, z.B. Volljährigkeit gegeben sein muss, mit authentischen Merkmalen kombiniert sein müssen. Eine derartige Einrichtung ist, allgemein ausgedrückt, durch ein Transformationssystem realisierbar, das durch Eingabe der genannten Attribute in den persönlichen Computer eines Nutzers aktivierbar ist und hierauf die Generierung der den virtuellen Netzgänger implementierenden Datenströme vermittelt, die in einem Speicher des Transformationssystems in der zeitlichen Reihenfolge des Anfallens der Daten speicherbar sind, so dass mit dem virtuellen Netzgänger auch Kontakt aufgenommen werden kann.

Einrichtungen dieser Art (David Chaum, "Security without identification: Transaction Systems to make big brother obsolete", CHCM (28,10), Oktober 1985, pp.1030 - 1044; Stuart Stubblebine und Paul F. Syverson, "Authentic attributes with fine-grained anonymity protection", Financial Cryptography 2000, LNCS serious, Springer-Verlag, 2000) haben, eine sorgfältige Implementierung vorausgesetzt, die Eigenschaft, die Identität des Nutzers, der hinter dem als Pseudonym genutzten Netzgänger steckt, weitestgehend zu verbergen und können aus diesem Grunde die Funktion einer "Tarnkappe zu vermitteln, unter der der Nutzer des Pseudonyms nicht sichtbar ist oder zumindest unerkannt bleiben kann.

Systeme der bekannten Art haben somit den Vorteil, dass sie ein die Tarnkappe tragendes, natürliches oder juristisches Individuum effizient gegen Veröffentlichung persönlicher Daten und Eigenschaften oder auch gegen Belästigungen oder Angriffe schützen, sind aber auch mit dem Nachteil behaftet, dass sich ein Träger einer solchen Tarnkappe der staatlichen Autorität entziehen und, ohne Sanktionen fürchten zu müssen, Aktivitäten entfalten kann, die zu beträchtlichem gesellschaftlichem Schaden führen können.

Zwar kann davon ausgegangen werden, dass eine kriminelle Nutzung von der Einrichtung der eingangs genannten Art nicht verborgen bleiben kann und eine Zurückverfolgung der Datenspur, die auch der virtuelle Netzgänger hinterlässt, bis hin zu seinem Urheber und mithin auch eine Verfolgung von Straftaten möglich ist, jedoch ist ein dafür erforderlicher Aufwand so erheblich, dass er nicht mehr in einem angemessenen Verhältnis zu dem aus Gründen der Rechtsstaatlichkeit anzustrebenden Erfolg, z.B. Schutz der Bevölkerung vor Straftaten, steht.

US 2003/0172090 A1 befasst sich mit einer virtuellen Identitätsvorrichtung und ein Verfahren für die Verwendung derselben, welches eine Authentisierung und Identifizierung mittels einer virtuellen Identitätskarte erlauben soll. Das dort beschriebene System ist verlässlich, solange niemandem Einblick in die dort gespeicherten den Nutzer betreffenden Daten gewährt wird. Der Artikel "Telecommunications data retention" aus Wikipedia vom 12. Januar 2009, XP002585222 betrifft die EU-Direktive 2006/24/EC zur Vorratsdatenspeicherung in der Telekommunikation. SYVERSON P F ET AL: "Anonymous connections and onion routing" SECURITY AND PRIVACY, 1997.PROCEEDINGS., 1997 IEEE SYMPOSIUM ON OAKLAND, CA, USA, betrifft anonyme Verbindungen und "onion routing". WO 2005/034424 A1 betrifft ein Verfahren und ein System zum Herstellen einer Kommunikation unter Verwendung von Anonymisierungstechniken unter Verwendung einer Chip-Karte, wobei die Identität des Handelnden der gegenüberliegenden Seite nicht offengelegt wird.

Aufgabe der Erfindung ist es daher, ein Verfahren und eine Einrichtung der eingangs genannten Art dahingehend zu gestalten, dass unter angemessener Wahrung des Interesses des Pseudonymnutzers an der Geheimhaltung seiner Identität gleichwohl auch im Falle einer dringenden Notwendigkeit, z.B. zum Zweck einer Verhinderung einer Straftat oder deren Aufklärung, auch eine angemessene Zugriffsmöglichkeit der staatlichen Autorität, auf den Nutzer des Pseudonyms gegeben ist. Erfindungsgemäß wird diese Aufgabe durch das Verfahren gemäß Patentanspruch 1 bzw. durch die Einrichtung gemäß Patentanspruch 7 gelöst. Vorteilhafte Ausgestaltungen der Erfindung sind in den abhängigen Ansprüchen definiert.

Hiernach ist - zusätzlich zu dem/den nutzerbezogenen Transformationssystem/en - mindestens ein weiteres zu den vorgenannten Systemen analog aufgebautes Transformationssystem vorgesehen, das einer unabhängigen Autorität, z.B. der staatlichen Strafverfolgungsbehörde zugeordnet ist, die dieses System aktivieren und dadurch das Auslesen von Daten aus einem nutzerbezogenen Transformationssystem initiieren kann, nämlich solchen Daten, welche Informationen über das jeweilige Netzzugangsgerät enthalten, über das der virtuelle Netzgänger in das Netz gelangt ist und "dort" durch Handlungen des virtuellen Netzgängers in den Verdacht geraten ist, gesetzeswidrige Handlungen zu begehen oder begehen zu wollen.

Die Implementierung der Zugangsmöglichkeit der unabhängigen Autorität, z.B. der Strafverfolgungsbehörde ist, wegen der strukturellen und baulichen Analogie der Zugriffseinrichtung zu der Einrichtung zur Generierung des virtuellen Netzgängers, einfach und nur mit geringem Mehraufwand behaftet und daher kostengünstig realisierbar. Die durch eine erfindungsgemäβe Gestaltung der Einrichtung implizierte Einschränkung der Anonymitätsinteressen des Nutzers erscheint angemessen und ausgewogen, da diese Einschränkung von rechtsstaatlichen Maßnahmen abhängig gemacht ist, die ihrerseits einem ausgewogenen Ausgleich von individuellen und gesellschaftlichen Interessen dienen.

In der bevorzugten Gestaltung der erfindungsgemäßen Einrichtung gemäß Anspruch 2 ist für die Daten, die der unabhängigen Autorität, z.B. der Staatsanwaltschaft, nach Berechtigungsnachweis für den Zugriff dieser zugänglich gemacht werden können, ein eigenes Zugriffsregister vorgesehen, in das die dem Zugriff unterwerfbaren Daten aus dem Speicher der Transformationseinrichtung ausgelesen werden können.

Hierdurch wird auf einfache Weise eine zusätzliche Sicherheit dafür geboten, dass die unabhängige Autorität, der Kategorie nach, nur solche Daten einsehen kann, die für die Aufklärung einer Straftat oder deren Verhinderung notwendig sind, nicht jedoch höchstpersönliche Daten, die mit einer Straftat nicht in Zusammenhang zu bringen sind.

Durch eine weitere bevorzugte Ausgestaltung der erfindungsgemäßen Einrichtung gemäß Anspruch 3 kann diese von dem den virtuellen Netzgänger steuernden Nutzer desselben auch zu Beweiszwecken genutzt werden, indem unter Rückgriff auf die Aktionen des virtuellen Netzgängers nachgewiesen wird, wann und zu welchem Zweck diese erfolgt sind.

Besonders vorteilhaft ist es, wenn vorgesehen, die Register, auf die die unabhängige Autorität oder der Nutzer Zugriff nehmen können, in separaten Räumen angeordnet sind, von denen aus kein - physischer - Zugang einer Person zu dem Speicher der Transformationseinrichtung möglich ist, wodurch unter Gesichtspunkten des Datenschutzes zusätzliche Sicherheit erzielbar ist.

Weil die erfindungsgemäße Einrichtung mindestens zwei Transformationseinrichtungen umfasst, die alternativ zur Generierung des virtuellen Netzgängers arbeiten können, ist auf einfache Weise eine zeitlich kontinuierliche Implementierung desselben möglich, wobei in zweckmäßiger Ausgestaltung für die alternativ arbeitenden Transformationseinrichtungen jeweils nur ein Satz von Zugriffsregistern für die verschiedenen Datenkategorien, zu denen Zugriff möglich sein soll, vorgesehen ist.

Hierbei kann es aus Gründen eines wirksamen Datenschutzes, genauer ausgedrückt zur Erkennung einer Verletzung des Datenschutzes, die im Zuge von Wartungsarbeiten möglich sein könnte, besonders zweckmäßig sein, wenn wie gemäß Anspruch 7 vorgesehen, die in den alternativen Netzgänger-Generatoren erzeugten Daten einer korrelierenden Verarbeitung unterwerfbar sind, die für den Fall, dass identische Daten in beiden Transformationssystemen vorliegen, sofort zu der Erkennung einer Verletzung des Datenschutzes führt.

Wenn, wie gemäß Anspruch 8 vorgesehen, Transformationseinrichtungen der jeweiligen Netzgänger-Generatoren über Misch-Knoten mit einer Vielzahl von Netzzugangsgeräten verbunden sind, können diese Knoten die Funktion eines datentechnischen "Mix" vermitteln, durch den sich eine für den Datenschutz erwünschte Verschleierung der Herkunft der Daten ergibt.

Durch die Merkmale des Anspruchs 9 sind mit Bezug auf die unabhängige Autorität, die in einem durch die Gesetze vorgegebenen engen Rahmen Zugriff zu nutzer-charakteristischen Daten erlangen können soll, und durch die Merkmale des Anspruchs 10 mit Bezug auf den Nutzer, der im Rahmen des gesetzlich Zulässigen im Netz agieren und dabei anonym bleiben möchte, einfach implementierbare, plausiblen Zwecken dienende Gestaltungen und von Datenträgern und Lesegeräten angegeben, die der unabhängigen Autorität beziehungsweise dem jeweiligen Nutzer zugeordnet sind.

In einer besonders vorteilhaften Ausgestaltung der erfindungsgemäßen Einrichtung ist ein mobiles, von einem Nutzer mitführbares Lesegerät vorgesehen, das z.B. über Bluetooth funktionell mit dem Netzzugangsgerät des Nutzers koppelbar ist; ein solches Gerät kann für einen Typ von Netzgänger ausgelegt sein, der z.B. allein dadurch aktivierbar ist, dass der Nutzer zum Nachweis seiner Berechtigung einen Fingerabdrucksensor zweckentsprechend nutzt oder auch für mehrere Netzgänger-Rollen geeignet sein, denen eine entsprechende Mehrzahl von Datenträgern - Rollenkarten - zugeordnet ist, die in einem Vorratsbereich des Lesegeräts untergebracht sein können, derart, dass nach einem Ansprechen des Fingerabdruck-Sensors alle Rollen zur Verfügung stehen.

Weiter ist in zweckmäßiger Ausgestaltung der Erfindung ein Eingabegerät vorgesehen, mittels dessen der virtuelle Netzgänger allein durch Steuerbefehle, die der Nutzer über eine Eingabeeinrichtung eingeben kann, aktivierbar ist, d.h. allein durch Software-Maßnahmen, die auch dann eine Aktivierung eines Netzgängers ermöglichen, wenn ein diesem zugeordneter Datenträger nicht zur Verfügung steht, z.B. vergessen worden ist oder beschädigt ist. Gegenstand der Erfindung ist auch ein Verfahren zur Generierung eines virtuellen Netzgängers, der zum Zweck des Datenschutzes als Pseudonym nutzbar ist, unter dem eine natürliche oder juristische Person sich Zugang zum Internet verschaffen und über das Netz implementierbare Dienste in Anspruch nehmen kann sowie mit den weiteren, im Patentanspruch 1 genannten Verfahrensmerkmalen, dessen eines wesentliches Charakteristikum darin besteht, dass nur diejenigen Daten, welche die Information über das/die Netzzugangsgeräte enthalten, über welches/welche der/die virtuelle/n Netzgänger in das Netz gelangt ist/sind, in Festspeichern des Transformationssystems gespeichert werden und den Zugriff einer unabhängigen Autorität, z.B. der Strafverfolgungsbehörde unterwerfbar sind, wogegen eine Speicherung der Rollendaten, die für den Netzgang des Nutzers generiert werden, in flüchtigen Speichern des Transformationssystems erfolgt, die mit Beendigung des Netzganges gelöscht werden.

Hierdurch wird mit technischen Mitteln ein hohes Maß an Datenschutz erreicht.

Besonders vorteilhaft ist es hierbei, wenn vorgesehen, die die Rollenidentität betreffenden Verkehrsdaten, einerseits, und die den Nutzer betreffenden Verkehrsdaten, andererseits, mit verschiedenen Schlüsseln verschlüsselt werden.

Ein besonders hohes Maß an Sicherheit gegen unerlaubten Zugriff auf personenbezogene Daten kann dadurch erreicht werden, dass, wie gemäß Anspruch 17 vorgeschlagen, der Schlüssel, bei dessen Kenntnis die Rollendaten lesbar sind, bei einem Netzgang vom Nutzer selbst in das Transformationssystem eingegeben wird.

Durch dieses Vorgehen wird erreicht, dass dem Betreiber der Einrichtung 10 keinerlei Daten mehr zugänglich sind, die auf die Identität des Nutzers schließen ließen. Es wird im Prinzip ausgeschlossen, dass dem Betreiber die Rolle eines "Big Brother" zuwachsen kann, die somit weitgehend obsolet wird.

Die erfindungsgemäße Einrichtung ist, dank der für den Nutzer gegebenen Wahlmöglichkeiten zur Generierung der verschiedensten Typen von Netzgängern geeignet, deren Habitus zwischen dem eines fantasievollen Avatars und einer realitätsnahen "menschlichen" Gestaltung variieren kann.

Weitere Einzelheiten und Merkmale der Erfindung ergeben sich aus der nachfolgenden Erläuterung eines bevorzugten Realisierungsbeispiels anhand der Zeichnung.

Es zeigen:
- Fig. 1: ein schematisch vereinfachtes Blockschaltbild einer erfindungsgemäßen Einrichtung zur Generierung eines virtuellen Netzgängers zum Zweck der Erläuterung ihrer Funktion,
- Fig. 2: Einzelheiten einer Transformationseinrichtung der Einrichtung gemäß Fig. 1, ebenfalls in schematisch vereinfachter Blockschaltbilddarstellung,
- Fig. 3a: eine schematisch vereinfachte perspektivische Darstellung eines bei der Einrichtung gemäß Fig. 1 einsetzbaren Authentifizierungsmoduls,
- Fig. 3b und 3c: Lesemodule in einer der Fig. 3a entsprechenden Darstellung,
- Fig. 3d: ein weiteres, funktionell dem Lesemodul gemäß Fig. 3b entsprechendes Lesemodul, das als Mobilgerät mit drahtloser Verbindung zum Netzzutrittsgerät ausgebildet ist.

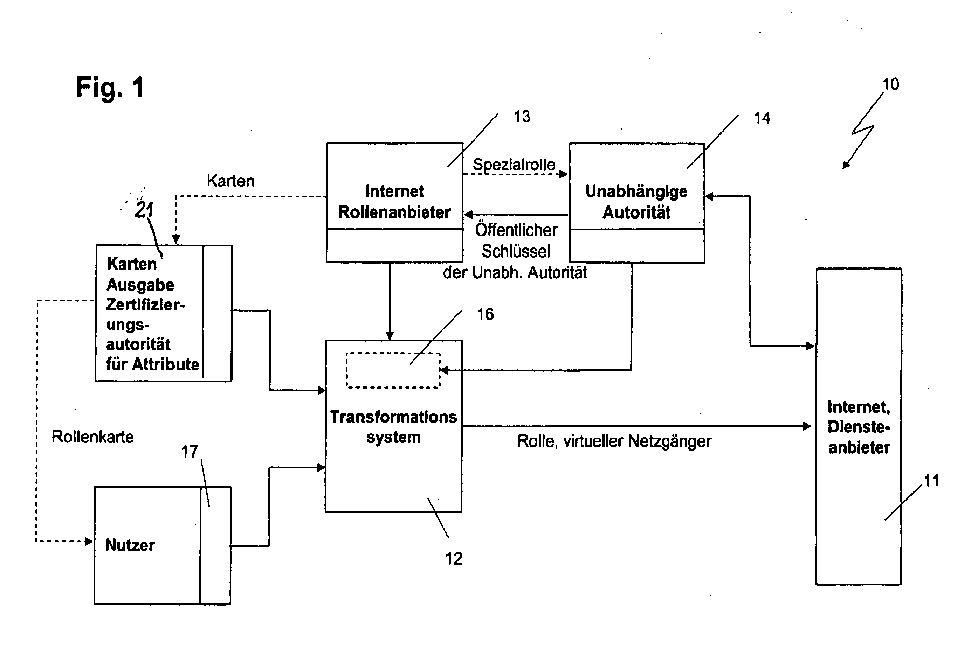

Die in der Fig. 1 insgesamt mit 10 bezeichnete Einrichtung zur Generierung eines virtuellen Netzgängers ist dafür gedacht, einem Nutzer des Internet oder eines vergleichbaren Netzes, das in der Blockschaltbilddarstellung der Fig. 1 durch den Block 11 schematisch repräsentiert sei, in die Lage zu versetzen, den von seinem Netzzugangsgerät, in der Regel einem üblichen Personal-Computer (PC), aus erzeugten Datenverkehr unter einem Pseudonym führen zu können, nämlich sich des "virtuellen Netzgängers" als Stellvertreter zu bedienen. Zweck dieser Maßnahme ist es dabei, sich selbst gegen unerwünschte Kommunikation mit anderen Nutzern des Netzes 11 dadurch zu schützen, dass diesen die wahre Identität des Nutzers verborgen bleibt.

Zu diesem Zweck ist die Einrichtung 10 so konzipiert, dass ein nach den Wünschen des Nutzers konzipierter virtueller Netzgänger generiert wird, der jedoch, bevor er im Netz aktiv werden kann, seine Zutrittsberechtigung, z.B. durch Nachweis seiner Rechtsfähigkeit, belegt haben muss, um insoweit gesetzlichen Anforderungen zu genügen. Die Konzeption der Einrichtung 10 setzt auch voraus, dass der Nutzer damit einverstanden ist, dass der staatlichen Autorität, selbstverständlich im Rahmen der Rechtsstaatlichkeit, Zugriffsmöglichkeiten auf den Nutzer selbst gewährt werden müssen, um etwaige Straftaten, die unter dem Pseudonym begangen werden, verfolgen zu können und/oder vorbeugende Maßnahmen treffen zu können, wenn das Verhalten des virtuellen Netzgängers Verdachtsmomente auf strafbare Handlungen ergibt.

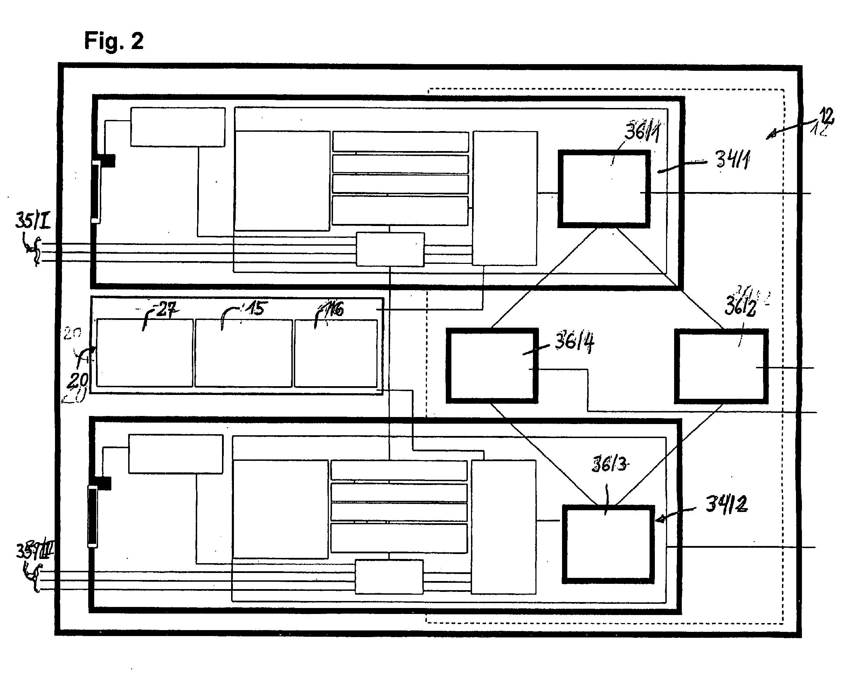

Zur Implementierung dieses der Einrichtung 10 zugrunde liegenden Konzepts ist zwischen den persönlichen Bereich des Nutzers, der durch sein Netz-Zugangsgerät 17 (seinen PC) repräsentiert ist, und den Netzbereich 11 ein insgesamt mit 12 bezeichnetes Transformationssystem funktionell eingefügt, das unter der Kontrolle eines Rollenanbieters steht, der dem Nutzer die Dienstleistung erbringt, ihm zu einer virtuellen Identität zu verhelfen, unter der er im Netz auftreten und agieren kann. Der Rollenanbieter ist in der schematisch vereinfachten Blockschaltbilddarstellung der Fig. 1 durch eine lediglich schematisch angedeutete Netz-Zugriffseinheit 13 repräsentiert, über die er z.B. zum Zwecke der Funktionsüberwachung und -sicherung des Transformationssystems 12 auf dieses Zugriff nehmen kann; im Bedarfsfalle soll auch die staatliche Autorität, die ihrerseits durch ein lediglich schematisch angedeutetes Eingabegerät 14 repräsentiert ist, in einem begrenzten Umfang auf Daten Zugriff nehmen können, die in einem gesonderten Register 16 (Fig. 2) des Transformationssystems 12 speicherbar sind, das Daten einer Kategorie enthält, die einen Rückschluss auf die Identität derjenigen natürlichen oder juristischen Person erlauben, für die das Netz-Zugangsgerät 17 registriert ist, über das - durch Eingabe von Steuerdaten in das Transformationssystem 12 - die Aktivität des virtuellen Netzgängers im Internet gesteuert werden kann.

Dieses Register 16 ist Teil einer insgesamt mit 20 (Fig. 2) bezeichneten Speichereinrichtung des Transformationssystems 12, zu dessen weiterer, in die Einzelheiten gehender Erläuterung nunmehr auch auf die Fig. 2 ausdrücklich Bezug genommen sei.

Im Bedarfsfalle kann, z.B. auf Antrag der Staatsanwaltschaft als möglicher Repräsentantin der unabhängigen Autorität, auf die in dem Register 16 gespeicherten Daten Zugriff gewährt werden, wobei dieser Zugriff, je nach Auslegung des Transformationssystems 12, entweder direkt durch die stattliche Autorität mittels ihres Eingabegeräts 14 oder durch Vermittlung des Rollenanbieters über dessen Zugriffseinheit 13 erlangt werden kann.

Die Konzeption des den natürlichen - realen - Nutzer im Netz 11 gleichsam vertretenden virtuellen Netzgängers - als Rolle, die dieser spielt, erfolgt in der Art eines Angebots durch einen Rollenanbieter, der dem Nutzer eine Auswahl möglicher Rollen anbietet oder durch Erstellen eines speziellen, mit dem Nutzer abgestimmten Netzgängerprofils, das einer individuellen Kombination von Attributen entspricht. Hierbei kann die "Persönlichkeit" des virtuellen Netzgängers derjenigen des realen Nutzers sehr ähnlich sein und einer Kombination von authentischen und willkürlich gewählten Eigenschaften - Attributen - entsprechen oder auch im Extremfall völlig willkürlich gewählt sein und einem Pseudowesen entsprechen, das unmittelbar als Fantasieprodukt erkennbar ist, gleichwohl wie eine natürliche oder juristische Person agieren kann. Des Weiteren muss gewährleistet sein, dass die staatliche Autorität ein Recht auf Zugriff zu Daten wahrnehmen kann, anhand derer im Ergebnis die hinter dem virtuellen Netzgänger stehende natürliche oder juristische Person erkannt werden kann, sofern hieran ein berechtigtes Interesse gegeben und den schutzwürdigen Interessen und Rechten des Nutzers im gesetzlich festgelegten Umfang entsprochen ist.

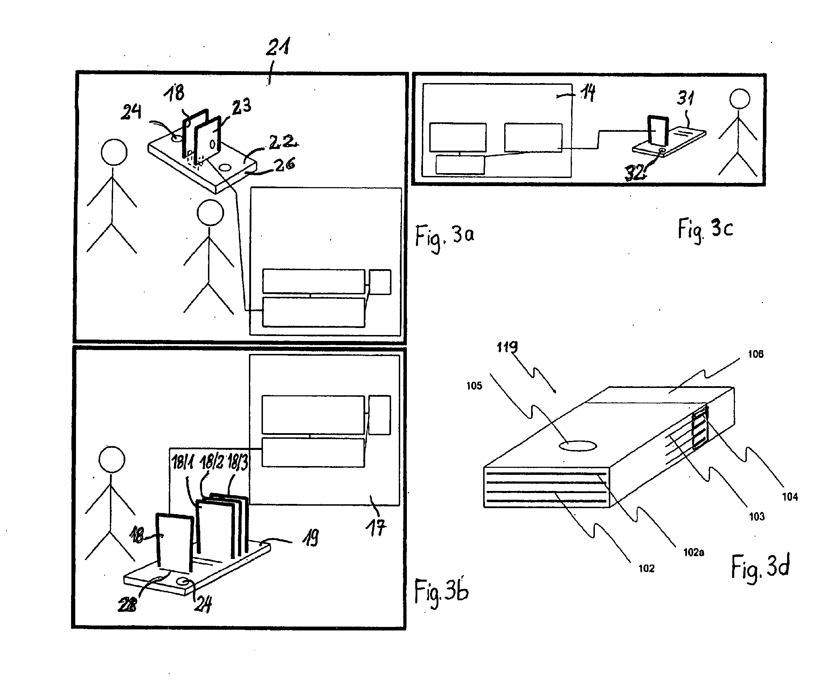

In spezieller Ausgestaltung der Generierung des virtuelle Netzgängers erwirbt der Nutzer von dem Rollenanbieter einen beispielsweise in der Art einer Chipkarte (Fig. 3a) ausgebildeten Datenträger 18, auf dem in maschinenlesbarer Form die der Rolle, unter der der virtuelle Netzgänger im Netz auftreten soll, zugeordneten Attribute der "Rollenidentität" gespeichert sind, sowie ein insgesamt mit 19 bezeichnetes Lesemodul (Fig. 3b), mittels dessen die gespeicherten "Rollen"-Daten lesbar und über das Netz-Zugangsgerät 17 des Nutzers, in der Regel dessen Personal-Computer (PC) an das zentrale Transformationssystem 12 der Einrichtung 10 weiterleitbar sind, das letztlich die den virtuellen Netzgänger charakterisierenden Daten generiert. Es sei an dieser Stelle angemerkt, dass eine Möglichkeit der Eingabe der Rollen-Daten in das Transformationssystem 12 der Einrichtung 10 in der Weise realisiert sein kann, dass schon bei der Festlegung der Attribute des virtuellen Netzgängers, d.h. beim Kauf einer Rollenkarte 18 die diese Attribute charakterisierenden Daten in das Transformationssystem 12 eingegeben werden und hiernach eine Aktivierung des virtuellen Netzgängers lediglich ein Einstecken der Rollenkarte 18 in den Einsteckschlitz des Lesemoduls 19 erfordert, oder alternativ in der Weise, dass die genannten Daten, die in ihrer Gesamtheit die Rollenidentität bilden, erst beim Lesevorgang für den aktuellen Netzgang in das Transformationssystem eingelesen werden. In beiden Fällen sind die Daten kryptografisch geschützt in dem zentralen Transformationssystem in dessen Speicher 20 festgehalten.

In der Regel umfasst der Datensatz, der bei dem Erwerb der Rollenkarte 18 erstellt wird und das Erscheinungsbild des virtuellen Netzgängers prägt, zusätzlich zu den die Rollenidentität und gegebenenfalls ein Passwort umfassenden Daten, die - im Prinzip beliebig - frei zusammenstellbar sind, für den Nutzer charakteristische - authentische - Daten, z.B. biometrische Daten, die bei der Erstellung der Karte, als deren Abgabe an den Nutzer erfolgte, zusätzlich zu schon vorhandenen Rollendaten auf der Karte 18 gespeichert worden sind. Die diesbezügliche Vorbereitung bzw. Anpassung des Lesemoduls 19, das als Standardgerät vom Rollenanbieter bereitstellbar ist, erfolgt während oder nach der Vorbereitung der Rollenkarte auf deren Aushändigung an den Nutzer an einer in der Fig. 1 lediglich schematisch dargestellten, insgesamt mit 21 bezeichneten Authentifizierungsstation. Diese Station ist zwar dem Bereich des Rollenanbieters zuzurechnen, ist dessen Zugriff jedoch in dem Sinne entzogen, dass der Inhalt einer an den Nutzer ausgegebenen Rollenkarte durch den Anbieter nicht mehr verändert werden kann, dem im allgemeinen auch nicht bekannt wird, welche natürliche oder juristische Person eine bestimmte Rolle erworben hat.

In einem weiteren Register 15 der Speichereinrichtung 20 der zentralen Zugangseinheit 12 sind auf Wunsch des Nutzers Daten speicherbar, die, z.B. in Kombination mit authentischen Attributen des Nutzers, den zeitlichen Ablauf von Aktivitäten des den Nutzer vertretenden Netzgängers beinhalten, und z.B. auf Wunsch des Nutzers unter Vermittelung des Rollenanbieters eingesehen werden können.

Zum Beleg authentischer Eigenschaften des Nutzers, z.B. zum Nachweis eines Mindestalters, der zutreffenden Angabe des Geschlechts und/oder seiner Staatsangehörigkeit ist ein Authentifizierungsmodul 22 (Fig. 3a), mit dem die Authentifizierungsstation 21 versehen ist, dahingehend gestaltet, dass auf dem Datenträger 18 Daten speicherbar sind, durch die belegbar ist, dass sowohl der Nutzer selbst als auch eine vom Anbieter zertifizierte Person gleichzeitig an der Authentifizierungsstation 21 anwesend gewesen sind und hierbei dem zertifizierten Vertreter des Rollenanbieters mindestens ein authentisches Merkmal der Person des Nutzers nachgewiesen oder zumindest als offensichtlich plausibel erscheinend dargelegt worden ist.

Eine derartige Authentifizierung kann z.B. dadurch erfolgen, dass sowohl ein Fingerabdruck des Nutzers als auch ein Fingerabdruck des zertifizierten Vertreters des Rollenanbieters auf der Rollenkarte 18 gespeichert werden. Dies erfolgt, nachdem sich die vom Rollenanbieter zertifizierte Person z. B. durch Einsichtnahme in den Personalausweis des Nutzers beziehungsweise Rollenkäufers vergewissert hat, dass dieser z.B. über achtzehn Jahre alt ist.

Das Authentifizierungsmodul 22 gemäß Fig. 3a ist in spezieller Gestaltung dahingehend ausgebildet, dass es mit je einem Einsteckschlitz für die Rollenkarte 18 des Nutzers und für eine dazu analog gestaltete Rollenkarte 23 des zertifizierten Vertreters versehen ist; das Authentifizierungsmodul 22 ist aktiviert, sobald beide Karten 18 und 23 in den ihnen jeweils zugeordneten Steckschlitz eingesteckt sind; bei dem zur Erläuterung gewählten Ausführungsbeispiel werden als biometrische Daten von beiden Personen die Fingerabdrücke eingescannt. Hierzu erforderliche Sensoren 24 und 26 sind in der Fig. 3a lediglich schematisch angedeutet.

Die solchermaßen gewonnenen authentischen biometrischen Daten werden beim gegebenen Beispiel zusammen mit den Daten des zertifizierten Vertreters des Rollenanbieters in dem Transformationssystem 12, gegebenenfalls in einem mit 27 bezeichneten schematisch angedeuteten Register desselben, gespeichert.

Das zur Generierung des virtuellen Netzgängers als Pseudonym für den Nutzer dienende Lesemodul 19 (Fig. 3b) der Einrichtung 10 ist, analog zu dem Authentifizierungsmodul 22 betriebsbereit, wenn die Rollenkarte 18 des Nutzers in einen Schlitz 28 des Lesemoduls 19 eingesteckt ist und dadurch die Rollenidentität über das Netz-Zugangsgerät 17 in das Transformatiorissystem 12 der Einrichtung 10 eingebbar ist, wobei die Internet-Aktivitäten des virtuellen Netzgängers mittels des Netz-Zugangsgeräts 17 des Nutzers steuerbar sind. Auch bei dem dem Nutzer zugeordneten Lesemodul 19 erfordert eine Aktivierung desselben, dass der Nutzer einen Sensor 24 für seinen Fingerabdruck betätigt.

Bei dem Lesegerät 19 sind weitere "blinde" Einsteckfächer für weitere Rollenkarten 18/1,18/2 und 18/3 vorgesehen, die weiteren Rollen bzw. Gestaltungen virtueller Netzgänger zugeordnet sind, deren sich der Nutzer als Pseudonyme - Stellvertreter - bedienen kann.

An Stelle eines Lese-Moduls 19, wie anhand der Fig. 3b erläutert, das über eine körperliche Datenleitung, z. B. ein elektrisches oder ein faseroptisches Kabel mit dem Netzzugangsgerät des Nutzers verbunden ist, kann auch ein in der Fig. 3d schematisch vereinfacht dargestelltes mobiles Lesegerät 119 vorgesehen sein, das mit dem Internetzugangsgerät über Nahfeldfunktechnik, z. B. Bluetooth, datentechnisch verbindbar ist. Ein solches Gerät umfasst in spezieller Gestaltung einen insgesamt mit 101 bezeichneten Kartenspeicher, der beim dargestellten speziellen Ausführungsbeispiel auf die Aufnahme von vier Rollenkarten ausgelegt ist, die von je einem Schlitz 102 aufgenommen werden. Es ist ein Fingerabdrucksensor 105 vorgesehen, bei dessen Berührung die Autorisierung zu einer Benutzung sämtlicher eingesteckter Rollenkarten erfolgt. Die Auswahl der Rolle, unter der der virtuelle Netzgänger auftritt, erfolgt entweder mittels des Internetzugangsgeräts oder mittels einer lediglich schematisch angedeuteten Auswahleinrichtung 106, die auch eine schematisch angedeutete Auswurfmechanik mit Hebeln 104 und Stützen 103 umfasst, die auf einfache Weise ein Entnehmen der Rollenkarten aus den Karten-Einsteckschlitzen 102 ermöglicht. Durch die im gemäß der Darstellung obersten Schlitz 102A angeordnete Rollenkarte ist die Standardrolle definiert, die automatisch durch diese Anordnung der Karte gewählt ist.

Die Auswahl einer anderen Rollenkarte zur Übergabe der Rollenidentität kann durch nicht dargestellte Auswahlelemente erfolgen, die als elektronische oder elektromechanische Elemente in gängiger Weise realisiert sein können.

Auch bei dem Lesemodul 31 (Fig. 3c), das einem Vertreter der unabhängigen - staatlichen - Autorität zugeordnet ist, ist bei dem zur Erläuterung gewählten Ausführungsbeispiel ein zur Sensierung biometrischer Daten eines autorisierten Vertreters der staatlichen Autorität dienenden Sensor, insbesondere ein Fingerabdrucksensor 32 vorgesehen, durch dessen Ansprechen wieder eine Rollenkarte 33 lesbar wird, aus der über das Eingabegerät 14 der unabhängigen Autorität deren Vertreter identifizierende Daten in die Zugangseinheit 12 eingebbar sind, wodurch im Ergebnis der staatliche Zugriff zu Daten möglich wird, die in dem Zugriffsregister 16 gespeichert sind und im Ergebnis das Netz-Zutrittsgerät 17 des "wahren" Nutzers und damit diesen selbst erkennbar werden lassen.

Diese Zugangsmöglichkeit ist im Einzelnen wie folgt implementiert: Der bei dem Erwerb der Rolle des virtuellen Nutzers erfolgende Authentifizierungsvorgang führt zu einer Zuordnung von Nutzern und Rolle, die in der Zugangseinheit 12 gespeichert wird, z. B. in einer Zeile, die als ersten Datenblock die Rollenidentität und als zweiten Datenblock den mit dem Nutzer verknüpfte Daten, z. B. sein Netzzugangsgerät 17 charakterisierende Daten umfasst. Hierbei werden die Rollenidentität und die den Nutzer betreffenden Verkehrsdaten in verschiedenen Schlüsseln verschlüsselt. Der Rollenanbieter ist gemäß einem wichtigen Aspekt der Erfindung weder in der Lage, die Rollendaten zu lesen, noch diejenigen Daten, die den Nutzer betreffen. Der Rollenanbieter ist lediglich in der Lage, diejenigen Daten zu lesen, die den Nutzer authentifizieren, d.h. ihn als berechtigten Kunden erkennen lassen, wobei der Nutzer selbst unter einem Pseudonym auftreten kann. Der Schlüssel, mit dem die Rollendaten lesbar sind, wird nicht beim Rollenanbieter gespeichert sondern bei jeder Sitzung - Vorbereitung eines Netzganges - von dem Nutzer in das Transformationssystem eingegeben. Der Schlüssel, mit dem diese nutzerbezogenen Daten lesbar sind, liegt im Zugriffsbereich der staatlichen Autorität, die ihrerseits jedoch nicht in der Lage ist, die Rollenidentität zu entschlüsseln.

Gerät z. B. der virtuelle Netzgänger in den Verdacht, eine Straftat begangen zu haben, kann die staatliche Autorität, z. B. der Staatsanwalt der im Besitz des Schlüssels für die nutzerbezogenen Daten ist, vom Rollenanbieter, dem er die Rolle aufgrund öffentlich zugänglicher Daten beschreiben kann, auffordern, diejenigen Datensätze, die mit der Rolle verknüpft sind, in das für die staatliche Autorität zugängliche Zugriffsregister 16 zu übertragen, das für diesen Fall diejenigen Informationen enthält, die der Staatsanwalt benötigt, zumindest das Netzzugangsgerät 17 zu ermitteln, das einen in den Verdacht einer Straftat geratenen virtuellen Netzgänger gesteuert hat und über dieses Netzzugangsgerät zum eigentlichen Täter zu gelangen.

Analog zu dieser Zugangsmöglichkeit kann eine weitere Zugriffsmöglichkeit für Dritte vorgesehen werden, die die Implementierung neuartiger Dienstleistungen ermöglicht. Beispielsweise kann einem weiteren Dienstanbieter, z.B. einem Logistikunternehmen, die authentische Lieferadresse für Einkäufe in einem "Online Shop" für eine bestimmte Lieferung zugänglich gemacht werden.

Bei der in der Fig. 2 dargestellten, speziellen Gestaltung des Transformationssystems 12 einer erfindungsgemäßen Einrichtung 10 zur Generierung eines virtuellen Netzgängers umfasst das Transformationssystem zwei insgesamt mit 34/1 beziehungsweise 34/2 bezeichnete Transformationskanäle, die über so genannte virtuelle private Netzwerke 35/I und 35/II jeweils mit dem Authentifizierungsmodul 21 (Fi. 3a), weiter mit dem Zugangsgerät 17 (Fig. 3b) des Nutzers, das an das Lesemodul 19 desselben angeschlossen ist, sowie mit dem Eingabegerät 14 (Fig. 3c) verbunden sind, über welches das Lesemodul 31 der unabhängigen Autorität - z.B. des Staatsanwalts - angeschlossen sind.

Diese Transformationskanäle 34/1 und 34/2 sind netzseitig über eine Mehrzahl von Netz-Knoten 36/1 bis 36/4 untereinander sowie mit weiteren Netz-Zugangsgeräten von weiteren Nutzern des Netzes 11 verbunden. Die Netz-Knoten 36/1 bis 36/4 vermitteln zudem die Funktion von Mischknoten, in denen die Datenströme gesammelt, Wiederholungen gelöscht, umcodiert und umsortiert werden, damit im Ergebnis die Herkunft der Nachrichten verschleiert wird. Die Mischknoten vermitteln somit die Funktion eines datentechnischen Mix bzw. einer Mix-Kaskade.

Diese Art der Einfügung der erfindungsgemäßen Einrichtung 10 in "örtliche" Strukturen des Netzes 11 ergibt eine erhöhte Population im Zugangsbereich des virtuellen Netzgängers, was den Schutz gegen unerwünschte Erkennung erhöht. Eine derartige Erhöhung der Population im betrachteten Netzbereich ist auch dadurch erreichbar, dass das Transformationssystem 12 selbsttätig Phantomnetzgänger generiert, die hier eine Erhöhung der Netzbesucher-Population gleichsam vortäuschen.

Für die beiden Transformationskanäle 34/1 und 34/2 des Transformationssystems 12 sei ohne Beschränkung der Allgemeinheit zunächst vorausgesetzt, dass sie, vereinfacht ausgedrückt, bei der Umsetzung des Nutzers in den virtuellen Netzgänger abwechselnd aktiviert sind, z.B. dahingehend, dass stets nur einer der beiden Kanäle im Sinne der Generierung des virtuellen Nutzers aktiv ist, und dass sich die beiden Kanäle in dieser Funktion abwechseln, z.B. in der Weise, dass sie alternierend für gleiche Zeitspannen die Transformationsfunktion durch die der virtuelle Netzgänger entsteht, implementieren; dabei ist weiter davon ausgegangen, dass im Falle einer Fehlfunktion des einen Kanals 34/1 oder 34/2 sofort der andere Kanal 34/2 bzw. 34/1 die Funktion des ausgefallenen Kanals übernimmt, so dass eine zeitlich kontinuierliche Implementierung der Transformationsfunktion gewährleistet ist. Durch diese "redundante" Gestaltung der Transformationseinheit 12 insgesamt wird die stetige zeitliche Fortsetzung des Netzgänger-Auftritts gewährleistet und vermieden, dass durch eine Fehlfunktion der Einrichtung 10 eine unerwünschte Aufdeckung der Identität des wahren Nutzers provoziert werden kann.

Von Bedeutung ist hierbei, dass bei Wartungsarbeiten an einem der beiden Transformationskanäle die Person, die diese Arbeiten durchführt, nicht Zugang zum anderen Transformationskanal erlangen kann, über den nunmehr der Datenverkehr erfolgt. Deshalb ist in bevorzugter Gestaltung des Transformationssystems 12 gemäß Fig. 2 vorgesehen, dass sich die den beiden Transformationskanälen 34/1 und 34/2 jeweils zugeordneten Funktionskomponenten in verschiedenen gegeneinander abgesperrten Räumen befinden.

Bei der 2-kanaligen Ausführung des Transformationssystems 12 ist es sicherheitstechnisch von Bedeutung, dass die Kanäle streng alternativ arbeiten, d.h. Daten, die die Aktivität des virtuellen Netzgängers dokumentieren in jeweils nur einem der beiden Kanäle generiert und gespeichert werden. In zweckmäßiger Gestaltung der Einrichtung 10 werden daher in den Kanälen 34/1 und 34/2 des Transformationssystems 12 sämtliche Daten nur flüchtig gespeichert. Demgemäß werden, wenn ein Kanal des Transformationssystems von einer Person für Wartungsarbeiten geöffnet wird, vor Freigabe des Zugangs zu dem Kanal alle Speicher des Kanals mit informationsfreien Datensätzen, beispielsweise "Nullen" beschrieben ("Data Flush"). Dies gilt auch im Falle von Daten, die innerhalb der Kanäle auf gewöhnlich nicht flüchtigen Speicher-Medien, wie z.B. einer Computerfestplatte gespeichert werden. Dies kann z.B. bei einem Auslagern von Inhalten wegen Speichermangels von flüchtigen Speichern auf gewöhnlich nicht flüchtige Speichermedien der Fall sein (so genanntes "Paging") oder beim Abspeichern des Inhalts eines flüchtigen Speichers innerhalb eines Kanals auf ein gewöhnlich nicht flüchtiges Medium im Falle einer Funktionsstörung im Prozessor (so genanntes "Core Dumping").

Zu einer diesbezüglichen Überprüfung ist ein nicht dargestellter Korrelator geeignet, der von Zeit zu Zeit eine korrelierende Verarbeitung in den beiden alternativen Kanälen generierter Daten, die in ihrer zeitlichen Reihenfolge gespeichert werden, durchführt. Führt diese Korrelation zu einem positiven Ergebnis, so ist dies ein Indiz für eine mindestens zeitweise Kombination der beiden Kanäle untereinander und damit ein Indiz für eine Fehlfunktion bzw. eine Lücke im Datenschutz, das zum Anlass für eine Überprüfung der Einrichtung 10 genommen werden muss.

## Patentansprüche

1. Verfahren zur Generierung eines virtuellen Netzgängers, der zum Zweck des Datenschutzes als Pseudonym nutzbar ist, unter dem eine natürliche oder eine juristische Person sich als Nutzer des Pseudonyms Zugang zum Internet verschaffen und über das Internet implementierbare Dienste in Anspruch nehmen kann,
wobei der Nutzer durch Authentifizierung anhand plausibler Merkmale nachweist, dass er zu dem Kreis von Personen gehört, die für eine Pseudonymisierung durch den virtuellen Netzgänger in Frage kommen, und
hierauf dem Nutzer eine wählbar vorgebbare Kombination von authentischen oder willkürlich wählbaren Attributen, gegebenenfalls beider Kategorien, zugewiesen wird,
die die Eigenschaften des als Pseudonym nutzbaren virtuellen Netzgängers definieren, und
mittels eines Zugangsgeräts (17), das der Nutzer zur Steuerung des Netzgängers einsetzt, in ein Transformationssystem (12) eingebbar sind,
das die Generierung den virtuellen Netzgänger implementierender Datenströme vermittelt,
wobei diese Datenströme in der zeitlichen Reihenfolge des Datenflusses - der zeitlichen Folge der generierten Daten - in einer Speichereinrichtung des Transformationssystems (12) gespeichert werden,
wobei
A) die den virtuellen Netzgänger charakterisierenden Rollendaten und die z.B. aufgrund gesetzlicher Vorschriften zu speichernden, auf den Benutzer bezogenen Daten, insbesondere die IP-Nummer des Zugangsgeräts (17), mittels dessen der Nutzer den virtuellen Netzgänger steuert, mit verschiedenen Schlüsseln verschlüsselt werden,
B) der Schlüssel für die Bearbeitung der Rollendaten vom Nutzer selbst in das Transformationssystem (12) eingegeben wird und
C) der Schlüssel, mit dem die nutzerbezogenen Daten lesbar sind, nur der staatlichen Autorität zur Verfügung gehalten werden,
und diejenigen Daten, welche die Information über das Zugangsgerät (17) enthalten, über welches der virtuelle Netzgänger in das Netz gelangt ist, in Festspeichern des Transformationssystems (12) gespeichert werden und dem Zugriff einer staatlichen Autorität unterwerfbar sind, wogegen eine Speicherung der Rollendaten, die für den Netzgang generiert werden, in flüchtigen Speichern des Transformationssystems (12) erfolgt, die mit Beendigung des Netzganges gelöscht werden, und
das Transformationssystem (12) mindestens zwei Transformationskanäle (34/1, 34/2) umfasst, die alternativ die Generierung des virtuellen Netzgängers implementieren, wobei in den Transformationskanälen (34/1, 34/2) des Transformationssystems (12) sämtliche Daten flüchtig gespeichert werden und wenn ein Transformationskanal (34/1, 34/2) für Wartungsarbeiten geöffnet wird, vor Freigabe des Zugangs zu dem Transformationskanal (34/1, 34/2) alle Speicher des Transformationskanals (34/1, 34/2) mit informationsfreien Datensätzen beschrieben werden.

2. Verfahren nach Anspruch 1, **dadurch gekennzeichnet, dass** Handlungen des virtuellen Netzgängers dokumentierende Daten in einem zugeordneten Register (15) gespeichert werden.

3. Verfahren nach einem der Ansprüche 1 oder 2, **dadurch gekennzeichnet, dass** die unabhängige Autorität, z.B. eine Strafverfolgungs- oder Verwaltungsbehörde, zum Nachweis ihrer Zugriffsberechtigung auf Daten, die einen Hinweis auf die Person des Nutzers geben können, vom Betreiber des Netzes, in dem der virtuelle Netzgänger agiert, mit einem Datenträger (33) ausgestattet wird, auf dem in maschinenlesbarer Form zertifizierte Daten gespeichert sind, welche die Identität der die unabhängige Autorität vertretenden, natürlichen Person und deren Befugnis für den Zugriff zum Speicher des Transformationssystems (12) belegen, und dass die Überprüfung der Zutrittsberechtigung und die Freigabe des Zutritts durch eine konjunktive Verknüpfung der aus dem Datenträger eingelesenen Daten mit Identifizierungsdaten erfolgt, die den Vertreter der unabhängigen Autorität charakterisieren.

4. Verfahren nach einem der Ansprüche 1 bis 3, **dadurch gekennzeichnet, dass** der Nutzer den Zutritt zu dem Transformationssystem, das den Netzgänger generiert, mittels eines Datenträgers (18) erlangt, auf dem in maschinenlesbarer Form Daten gespeichert sind, welche authentische Attribute des Nutzers und/oder ausschließlich den virtuellen Netzgänger charakterisierende Attribute umfassen, und dass die Freigabe des Netzzutritts aus einer konjunktiven Verknüpfung auf dem Datenträger gespeicherter Daten mit mindestens dem Dienstanbieter vor Übergabe der Karte nachgewiesenen, authentischen Daten erfolgt, durch die die Erfüllung notwendiger Bedingungen nachweisbar ist.

5. Verfahren nach Anspruch 4, **dadurch gekennzeichnet, dass** an einer Authentifizierungsstation (21), die ein Anthentifizierungsmodul (22) umfasst, mittels dessen zur Erstellung einer den Netzgänger charakterisierenden Rolle eine Kooperation des Rollenanbieters mit dem Nutzer erfolgt, zertifizierungsbedürftige Angaben des Rollennutzers (z. B. Alter, Geschlecht, Wohnort) durch einen Rollenanbieter bestätigt werden.

6. Verfahren nach Anspruch 5, **dadurch gekennzeichnet, dass** gleichzeitig oder innerhalb einer Eingabe-Zeitspanne definierter Dauer ausschließlich den Anbieter oder dessen Vertreter, einerseits, und, andererseits, den Nutzer jeweils eindeutig charakterisierende Eigenschaften, z. B. biometrische Daten, in ein Authentifizierungsmodul (22) eingegeben werden, das dem Anbieter, einerseits, und dem Rollennutzer, andererseits, einzeln zugeordnete Eingabeeinrichtungen hat.

7. Einrichtung zur Durchführung des Verfahrens nach einem der Ansprüche 1 bis 6.

8. Einrichtung nach Anspruch 7, **dadurch gekennzeichnet, dass** die in alternativ arbeitenden Netzgänger-Generatoren erzeugten Daten von Zeit zu Zeit einer korrelierenden Verarbeitung unterwerfbar sind.

9. Einrichtung nach einem der Ansprüche 7 bis 8, **dadurch gekennzeichnet, dass** das Transformationssystem (12; 34/1, 34/2) über Mix-Knoten mit einer Vielzahl von Netzzugangsgeräten datentechnisch verbunden ist.

10. Einrichtung nach einem der Ansprüche 7 bis 9, **dadurch gekennzeichnet, dass** ein mobiles, von einem Nutzer der Einrichtung (10) mitführbares Lesegerät (119) vorgesehen ist, das mit dem jeweiligen Netzzugangsgerät über Nahfeldfunktechnik verbindbar ist.

11. Einrichtung nach einem der Ansprüche 7 bis 10, **dadurch gekennzeichnet, dass** ein Eingabegerät vorgesehen ist, mittels dessen der virtuelle Netzgänge allein durch vom Nutzer initiierte Steuerbefehle aktivierbar ist.

## Claims

1. Method for generating a virtual network user, for the purpose of privacy, that can be used as a pseudonym under which a physical person or legal entity may gain access to the internet as a user and engage services that can be implemented via the network,
wherein the user proofs, by authentication with plausible attributes, that he belongs to the persons which can be hidden behind a pseudonym by the virtual network user, and
whereupon a selectable predefined combination of authentic or arbitrarily selectable attributes, or both categories, is assigned to the user,
which define the properties of the virtual network user usable as a pseudonym, and
which by means of an access device (17) which the user uses for controlling the network user, can be input into a transformation system (12),
which procures the generation of the data streams implementing the virtuai network user,
whereby these data streams are stored in temporal sequence of the data flow - of the temporal sequence of the generated data - in a storage device of the transformation system (12),
wherein
A) the roll data characterizing the virtual network user and the data related to the user to be stored based on e.g. legal provisions, in particular the IP-number of the access device (17), by means of which the user is controlling the virtual network user, is encrypted with different keys,
B) the key for processing the roll data is input by the user himself into the transformation system (12), and
C) the key with which the user related data is readable is only made accessible to the legal authority,
and the data which comprises the information concerning the access device (17) via which the virtual network user has accessed the network is stored in permanent storage devices of the transformation system (12) and can be subjected to the access of a legal authority, whereas the roll data which is generated for the service usage is stored in transient storage devices of the transformation system (12), which are erased at the end of the service usage, and
the transformation system (12) comprises at least two transformation channels (34/1, 34/2) which implement alternately the generation of the virtual network user, wherein in the transformation channels (34/1, 34/2) of the transformation system (12) all data is transiently stored, and when one transformation channel (34/1, 34/2) is opened for maintenance, prior to releasing the access to the transformation channel (34/1, 34/2) all storage devices of the transformation channel (34/1, 34/2) are written with information free data sets.

2. The method according to claim 1, **characterized in that** data representing operations of the virtual network user is stored in an associated register (15).

3. The method according to one of claims 1 or 2, **characterized in that** the independent authority, e.g. a prosecution or administration authority, for proofing its access authorization to data which could give an indication to the person of the user, is provided with a data carrier (33), by the operator of the network in which the virtual network user is acting, on which, in machine-readable form, certified data is stored which proofs the identity of the physical person representing the independent authority and its competence for the access to the storage of the transformation system (12), and that the verification of the access authorization and the release of the access is performed by a conjunctive linkage of the data read from the data carrier with identification data which characterizes the representative of the independent authority.

4. The method according to one of claims 1 to 3, **characterized in that** the user gets access to the transformation system which generates the network user, by means of a data carrier (18) on which data is stored in machine-readable form which comprises authentic attributes of the user and/or only attributes characterizing the virtual network user, and that the release of the network access results from a conjunctive link of data stored on the data carrier with authentic data proofed at least to the service provider prior to handing out of the card, by which the satisfaction of necessary conditions can be verified.

5. The method according to claim 4, **characterized in that** at an authentication station 21 which comprises an authentication module (22) by means of which a cooperation of the roll provider with the user is performed for establishing a roll characterizing the network user, roll user data which is to be certified (e.g., age, gender, address) is confirmed by a roll provider.

6. The method according to claim 5, **characterized in that** simultaneously or within an input time period of defined length attributes uniquely characterizing exclusively the provider or his representative on the one hand, and the user on the other hand, respectively, e.g. biometric data, is input into an authentication module (22) which comprises input devices uniquely associated with the provider on the one hand, and to the roll user on the other hand.

7. Device for performing the method according to one of claims 1 to 6.

8. Device according to claim 7, **characterized in that** the data created in the alternatively operating channels generating virtual network users, can be correlated from time to time.

9. Device according to one of claims 7 to 8, **characterized in that** the transformation system (12; 34/1, 34/2) is connected over mix nodes with a plurality of network access devices.

10. Device according to one of claims 7 to 9, **characterized in that** a portable mobile reader (119), that can be carried along by the user of the device (10), is provided, which can be connected with the particular network access device by near field radio technology.

11. Device according to one of claims 7 to 10, **characterized in that** an input device is provided that allows activation of the virtual network user solely by userinitiated control commands.

## Revendications

1. Procédé pour générer cybernaute virtuel qui est utilisable aux fins de la protection des données en tant que pseudonyme sous lequel une personne naturelle ou une personne juridique se procurer accès à internet en tant qu'utilisateur du pseudonyme et qui peut avoir recours à des services implémentables par internet,
dans lequel l'utilisateur prouve, par l'authentification à l'aide de caractéristiques plausibles, qu'il appartient au cercle des personnes qui entrent en ligne de compte pour une pseudonymisation par le cybernaute virtuel et
qu'ensuite une combinaison qui peut être prédéterminée de manière sélectionnable d'attributs authentiques ou pouvant être choisis de manière arbitraire, le cas échéant des deux catégories, est assignée à l'utilisateur,
attributs qui définissent les propriétés cybernaute virtuel utilisable comme pseudonyme et
qui peuvent être entrés dans un système de transformation (12) au moyen d'un appareil d'accès (17) que l'utilisateur utilise pour commander le cybernaute virtuel,
système qui procure la génération de flux de données qui implémentent le cybernaute virtuel,
ces flux de données étant stockés dans l'ordre de séquence temporelle du flux de données - de la séquence temporelle des données générées - dans un dispositif de stockage du système de transformation (12),
dans lequel
A) les données de rôle qui caractérisent le cybernaute virtuel, par exemple les données se référant à l'utilisateur qui doivent être stockées en raison de prescriptions légales, en particulier du numéro IP de l'appareil d'accès (17) au moyen duquel l'utilisateur commande le cybernaute virtuel, sont cryptées avec différentes clés,
B) la clé pour le traitement des données de rôle est entrée dans le système de transformation (12) par l'utilisateur lui-même et
C) que seule l'autorité étatique dispose de la clé avec laquelle les données d'utilisateur sont lisibles
et les données qui contiennent l'information sur l'appareil d'accès (17), par lequel le cybernaute virtuel est arrivé dans le réseau sont stockées dans des mémoires mortes du système de transformation (12) et peuvent être soumises à l'accès d'une autorité étatique, tandis qu'un stockage des données de rôle qui sont générées pour l'entrée dans le réseau est effectué dans des mémoires volatiles du système de transformation (12) qui sont effacées lorsque l'on quitte le réseau et
le système de transformation (12) comprend au moins deux canaux de transformation (34/1, 34/2) qui implémentent de manière alternative la génération du cybernaute virtuel, cependant que toutes les données sont stockées de manière volatile dans les canaux de transformation (34/1, 34/2) du système de transformation (12) et que, lorsqu'un canal de transformation (34/1, 34/2) est ouvert pour des travaux de maintenance, des ensembles de données dépourvus d'information sont écrits dans toutes les mémoires du canal de transformation (34/1, 34/2) avant le déblocage de l'accès au canal de transformation (34/1, 34/2).

2. Procédé selon la revendication 1, **caractérisé en ce que** des données qui documentent des actions du cybernaute virtuel stockées dans un registre correspondant.

3. Procédé selon l'une des revendications 1 ou 2, **caractérisé en ce que** l'autorité indépendante, par exemple une autorité de poursuite pénale ou une autorité administrative, est équipée, pour prouver son autorisation d'accès aux données qui peuvent donner une indication sur la personne de l'utilisateur, par l'opérateur du réseau dans lequel le cybernaute virtuel agit, d'un support de données (33) sur lequel des données certifiées sont stockées sous forme lisible par machine, données qui prouvent l'identité de la personne naturelle qui représente l'autorité indépendant et son habilitation à l'accès à la mémoire du système de transformation (12) et que le contrôle de l'autorisation d'accès et le déblocage de l'accès se fait par une combinaison soumise à condition des données lues à partir du support de données avec des données d'identification qui caractérisent le représentant de l'autorité indépendante.

4. Procédé selon l'une des revendications 1 à 3, **caractérisé en ce que** l'utilisateur obtient l'accès au système de transformation qui génère le cybernaute virtuel au moyen d'un support de données (18) sur lequel des données sont stockées sous forme lisible par machine qui comprennent des attributs authentiques de l'utilisateur et/ou des attribuent qui caractérisent exclusivement le cybernaute virtuel et que le déblocage de l'accès au réseau se fait à partir d'une combinaison soumise à condition de données stockées sur le support de données avec des données authentiques, prouvées au moins au fournisseur de services avant le transfert de la carte, par lesquelles il peut être prouvé que les conditions nécessaires sont remplies.

5. Procédé selon la revendication 4, **caractérisé en ce que** des indications de l'utilisateur de rôle (par exemple âge, sexe, résidence) sont confirmées par un fournisseur de rôles à un poste d'authentification (21) qui comprend un module d'authentification (22) au moyen duquel une coopération du fournisseur de rôles avec l'utilisateur est effectuée pour établir le tôle qui caractérise le cybernaute virtuel.

6. Procédé selon la revendication 5, **caractérisé en ce que** des propriétés qui caractérisent de manière univoque exclusivement le fournisseur ou son représentant d'une part et d'autre part l'utilisateur, par exemple des données biométriques, sont entrées simultanément ou au sein d'une durée de période d'entrée définie dans un module d'authentification (22) qui a des dispositifs d'entrée assignés individuellement au fournisseur d'une part et à l'utilisateur de rôle d'autre part.

7. Dispositif pour exécuter le procédé selon l'une des revendications 1 à 6.

8. Dispositif selon la revendication 7, **caractérisé en ce que** les données produites dans des générateurs de cybernaute virtuel fonctionnant de manière alternative peuvent être soumises de temps en temps à un traitement de corrélation.

9. Dispositif selon l'une des revendications 7 à 8, **caractérisé en ce que** le système de transformation (12 ; 34/1, 34/2) est relié de manière informatisée à une multitude d'appareils d'accès au réseau par des noeuds de mixage.

10. Dispositif selon l'une des revendications 7 à 9, **caractérisé en ce qu'**il est prévu un appareil de lecture mobile (119) qui peut être porté par un utilisateur du dispositif (10), appareil de lecture mobile qui peut être relié à l'appareil d'accès au réseau respectif par technique de communication radio en champ proche.

11. Dispositif selon l'une des revendications 7 à 10, **caractérisé en ce qu'**il est prévu un appareil d'entrée au moyen duquel le cybernaute virtuel peut être activé uniquement par des instructions de commande initiées par l'utilisateur.
